# EUROPÄISCHE PATENTSCHRIFT

(11) **EP 2 082 465 B1**
(45) Veröffentlichungstag und Bekanntmachung des Hinweises auf die Patenterteilung: **28.09.2011**
(21) Anmeldenummer: 07821684.3
(22) Anmeldetag: 23.10.2007
(51) Int. Cl.: H02G 11/00

(54) **LEITUNGSFÜHRUNGSANORDNUNG**
LINE ROUTING ARRANGEMENT
SYSTEME GUIDE-CABLE

(30) Priorität: 27.10.2006 DE 102006051425; 19.10.2007 DE 102007050505
(43) Veröffentlichungstag der Anmeldung: 29.07.2009
(73) Patentinhaber: Murrplastik Systemtechnik GmbH, 71570 Oppenweiler (DE)
(72) Erfinder: JOSTMEIER, Helmut, 71540 Murrhardt (DE); RÜHLE, Rainer, 71570 Oppenweiler (DE); MÖSS, Clemens, 71540 Murrhardt (DE)
(74) Vertreter: Reule, Hanspeter
(86) Internationale Anmeldenummer: PCT/EP2007/061320
(87) Internationale Veröffentlichungsnummer: WO 2008/049824

(56) Entgegenhaltungen:
- DE-A1- 10 352 461

## Beschreibung

Die Erfindung betrifft eine Leitungsführungsanordnung gemäß Oberbegriff des Anspruchs 1.

Solche Leitungsführungsanordnungen sind aus der DE 103 52 461 A1 bekannt. Dort ist beispielsweise eine Energieführungskette beschrieben, die so mit Magneten bestückt ist, dass ihr Obertrum über ihrem Untertrum in der Schwebe gehalten wird. Dadurch wird gegenüber herkömmlichen Energieführungsketten, bei denen das Obertrum auf dem Untertrum abgelegt wird, der Verschleiß vermindert. Zudem ist eine Bewegung der Energieführungskette geräuschärmer. Aus diesen Gründen hat sich die Energieführungskette in der Praxis bereits hervorragend bewährt. Allerdings kann es, da die in einer Reihe hintereinander angeordneten Magnete zwischeneinander Lücken aufweisen, in Einzelfällen zu ruckartigen Bewegungsabläufen kommen.

Es ist daher Aufgabe der Erfindung, eine Leitungsführungsanordnung der eingangs genannten Art derart weiterzubilden, dass sie einen gleichmäßigeren Lauf aufweist.

Die Aufgabe wird erfindungsgemäß durch eine Leitungsführungsanordnung mit den Merkmalen des Anspruchs 1 gelöst. Vorteilhafte Weiterbildungen sind Gegenstand der abhängigen Ansprüche.

Der Erfindung liegt der Gedanke zugrunde, eine durchgängige Bestückung des Trägers mit Magneten vorzunehmen, die den Biegeradius nicht oder nur wenig einschränkt. Dies wird dadurch erreicht, dass die Enden zweier in der Reihe aufeinanderfolgender Magnete seitlich zueinander versetzt angeordnet sind, so dass eine Verzahnung der Magnetanordnung gegeben ist. Dies resultiert in einem ruhigeren Lauf einer mit der Magnetanordnung bestückten Energieführungskette. Dabei ist anzumerken, dass als Träger nicht nur eine Energieführungskette in Frage kommt. Die erfindungsgemäße Lösung ist auf verschiedene Arten von Trägern zur Aufnahme von Leitungen anwendbar, wie beispielsweise auf Kabel, Schläuche und insbesondere Leitungsummantelungen, in denen mehrere Leitungen zusammengefasst sind.

Es wird bevorzugt, dass das zweite Ende jedes Magnets in der Längsrichtung betrachtet weiter vom ersten Trägerende entfernt ist als das erste Ende des in der Reihe folgenden Magnets. Diese Maßnahme verbessert den Lauf der Leitungsanordnung weiter, wenn der erste Abschnitt über den zweiten Abschnitt geführt wird.

Für die Magnete sind verschiedene geometrische Ausgestaltungen denkbar. So können sie in Draufsicht eine Trapezform oder als Sonderform des Trapezes eine Parallelogrammform aufweisen. Es ist auch denkbar, dass die Magnete in Draufsicht eine Pfeilkontur aufweisen. Diese weist eine Spitze an einem ihrer Enden und eine zur Spitze komplementäre Ausnehmung am anderen ihrer Enden auf. Schließlich ist auch denkbar, dass die Magnete in Draufsicht eine im wesentlichen Z-förmige Außenkontur aufweisen. Diese kann beispielsweise dadurch gegeben sein, dass die Magnete in Draufsicht die Form zweier entlang ihrer Breitseiten aneinandergefügter und gegeneinander versetzter Rechtecke aufweisen.

Zweckmäßig sind die Magnete am Träger abnehmbar montiert. Dabei wird bevorzugt, dass die Magnete jeweils in einer am Träger montierten Hülle aufgenommen sind. Die Hüllen weisen vorteilhaft jeweils eine Aufnahmetasche auf, in die einer der Magnete lose eingelegt ist. Durch diese Maßnahmen wird erreicht, dass die Magnete beispielsweise an einer Energieführungskette leicht montiert und leicht ausgetauscht werden können. Auch eine nachträgliche Montage an einer herkömmlichen Energieführungskette ist möglich. Es können zudem universelle Grundmodule der Magnete für die gängigsten Energieführungsketten hergestellt werden.

Vorteilhaft bestehen die Hüllen aus mindestens zwei lösbar miteinander verbundenen Teilen. Durch Lösen der Teile voneinander wird die Aufnahmetasche zugänglich, so dass ein Magnet entnommen oder eingesetzt werden kann. Zweckmäßig sind die Hüllenteile mittels Rasthaken miteinander verbunden, so dass zum Zusammenfügen der Teile und zum Lösen der Teile voneinander kein Werkzeug benötigt wird.

Im Folgenden wird die Erfindung anhand der in der Zeichnung schematisch dargestellten Ausführungsbeispiele näher erläutert. Es zeigen
- Fig. 1: eine mit zwei Magnetreihen bestückte Energieführungskette;
- Fig. 2: einen Abschnitt der Energieführungskette gemäß Fig. 1 in Draufsicht;
- Fig. 3: einen Magnet der Energieführungskette gemäß Fig. 1 samt Hülle und
- Fig. 4a, b, c: drei verschiedene Ausführungsformen einer Energieführungskette in schematischer Darstellung.

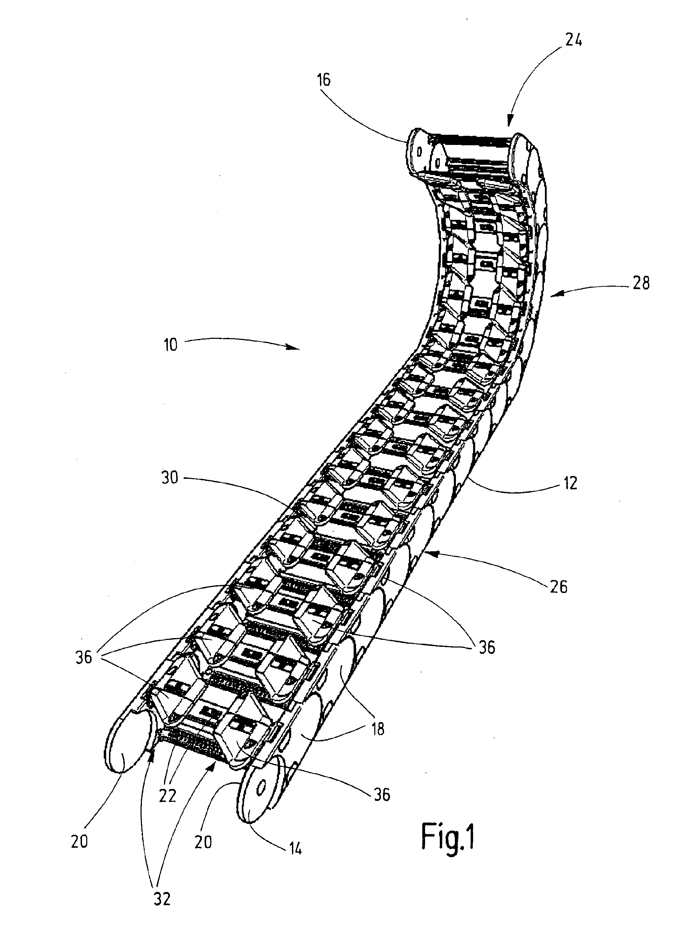

Eine Leitungsführungsanordnung 10 gemäß Fig. 1 wird durch eine Energieführungskette 12 gebildet, die der Aufnahme von Leitungen wie Stromkabeln, Druckluftleitungen und dergleichen dient. Sie verläuft in Längsrichtung von einem ersten Trägerende 14 bis zu einem zweiten Trägerende 16 und weist eine Anzahl von in Längsrichtung hintereinander angeordneten, gelenkig miteinander verbundenen Kettengliedern 18 auf, die jeweils zwei im Abstand zueinander parallel verlaufende Seitenglieder 20 aufweisen, die mittels Rahmenstegen 22 miteinander verbunden sind. Die Energieführungskette 12 wird im Betrieb mit einem ihrer Enden 14, 16 ortsfest montiert und mit dem anderen Ende 16, 14 an einer beweglichen Bearbeitungsmaschine montiert, die durch die in ihr geführten Leitungen versorgt wird. Im Einsatz können beim Verfahren der Energieführungskette 12 die Kettenglieder 18 so gegeneinander verschwenkt werden, dass ein erster Abschnitt 24 der Energieführungskette 12 als Obertrum auf einem zweiten Abschnitt 26 als Untertrum abgelegt werden kann. Die Abschnitte 24, 26 werden durch einen gebogenen Abschnitt 28 miteinander verbunden.

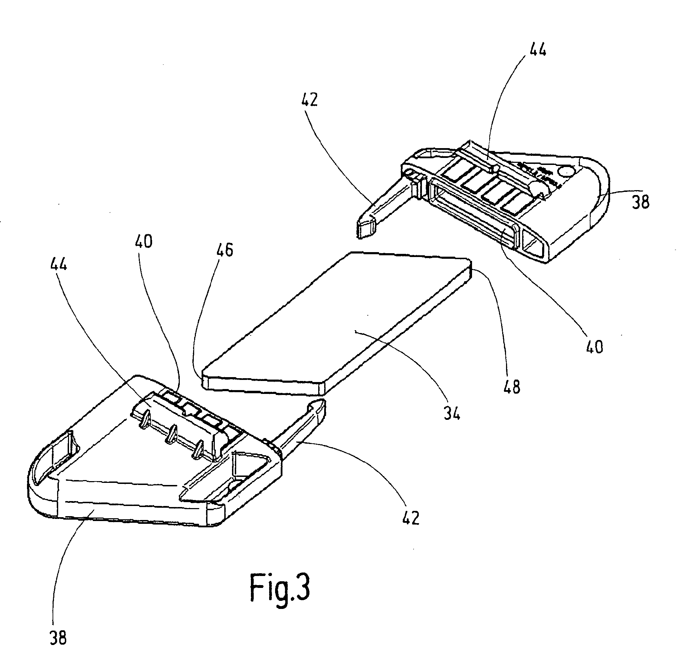

Beim Ablegen des Obertrums auf dem Untertrum wird das Obertrum über dem Untertrum berührungslos in der Schwebe gehalten. Dies wird dadurch erreicht, dass die Energieführungskette 12 an ihrer Oberseite 30 zwei im Abstand zueinander parallel in Längsrichtung verlaufende Reihen 32 von Magneten 34 angeordnet sind. Jeder der Magnete 34 ist in einer Kunststoffhülle 36 aufgenommen (Fig. 3), die aus zwei lösbar miteinander verbundenen Hüllenteilen 38 besteht. Diese weisen eine Aufnahmetasche 40 zur Aufnahme des Magnets 34 auf sowie Rasthaken 42, durch die sie miteinander verbunden werden können. Desweiteren weisen die baugleichen Hüllenteile 38 Befestigungsmittel 44 zur Befestigung an den Rahmenstegen 22 auf.

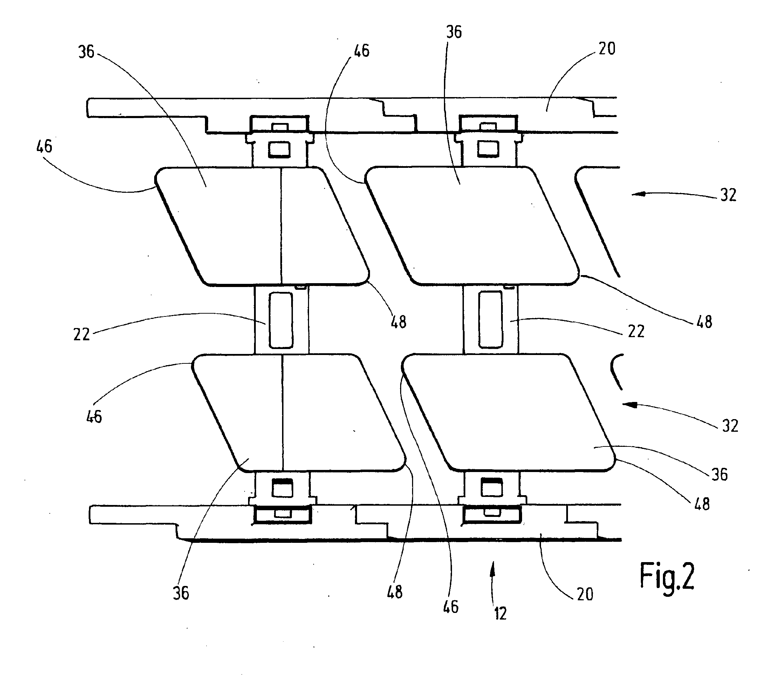

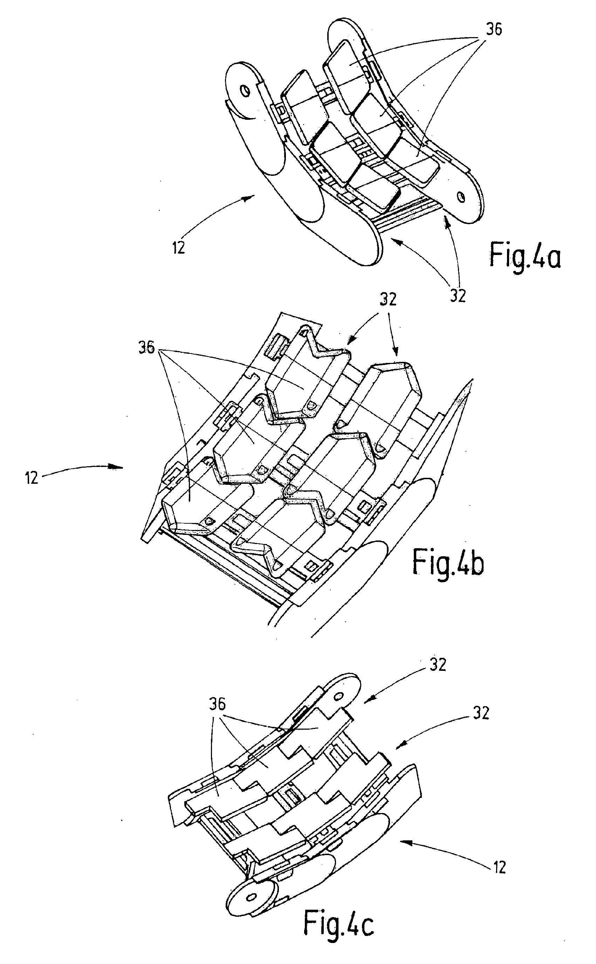

Die Magnete 34 jeder Reihe 32 sind so angeordnet, dass stets derselbe Magnetpol nach oben zeigt, so dass die Magnete 34 am Obertrum durch die Magnete 34 am Untertrum abgestoßen werden. In jeder der Reihen 32 erstrecken sich die Magnete 34 von einem ersten Ende 46 in Längsrichtung der Energieführungskette 12 bis zu einem zweiten Ende 48. Obwohl sich zwei aufeinander folgende Magnete 34 nicht berühren, so dass auch im gebogenen Abschnitt 28 genügend Platz zwischen den Magneten 34 vorhanden ist, weist jede der Reihen 32 in Längsrichtung eine durchgehende Magnetisierung auf. Dies wird dadurch erreicht, dass das zweite Ende jedes Magnets seitlich gegenüber dem ersten Ende des in der Reihe folgenden Magnets versetzt angeordnet ist. Dadurch ist es möglich, das zweite Ende 48 des Magnets 34 weiter vom ersten Ende 14 der Energieführungskette 12 entfernt anzuordnen als das erste Ende 46 des folgenden Magnets 34. Hierzu weisen die Magnete in dem in Fig. 1 bis 3 und 4a dargestellten Ausführungsbeispiel in Draufsicht eine Parallelogrammform als Sonderform der Trapezform auf. Im in Fig. 4b dargestellten Ausführungsbeispiel weisen die Magnete in Draufsicht eine Pfeilkontur auf, die am einen Ende eine Spitze und am anderen Ende eine zur Spitze komplementäre Ausnehmung aufweist. Beim dritten Ausführungsbeispiel gemäß Fig. 4c sind die Magnete in Draufsicht im wesentlichen Z-förmig. Sie haben jeweils die Form zweier an ihren Längsseiten aneinander gelegter und ein Stück weit gegeneinander verschobener Rechtecke. In allen drei Ausführungsbeispielen entspricht die Außenkontur der Hüllen 36 im wesentlichen der Außenkontur der Magnete 34.

Zusammenfassend ist folgendes festzuhalten: Die Erfindung betrifft eine Leitungsführungsanordnung 10 mit einem Träger 12 zur Aufnahme mindestens einer Leitung, der biegsam oder gelenkig ausgebildet und so faltbar ist, dass ein erster Abschnitt 24 über einem mit ihm durch einen gebogenen Abschnitt 28 verbundenen zweiten Abschnitt 26 ablegbar ist, wobei an einer die Unterseite des ersten Abschnitts 24 und die Oberseite des zweiten Abschnitts 26 bildenden Seite 30 des Trägers 12 mindestens eine sich in seiner von einem ersten Trägerende 14 zu einem zweiten Trägerende 16 verlaufenden Längsrichtung erstreckende Reihe 32 von Magneten 34 so angeordnet ist, dass bei einer Faltung des Trägers 12 Magnetpole am ersten Abschnitt 24 gleichnamigen Magnetpolen am zweiten Abschnitt 26 gegenüberliegen. Erfindungsgemäß ist vorgesehen, dass sich die Magnete 34 in der Längsrichtung jeweils von einem ersten Ende 46 bis zu einem zweiten Ende 48 erstrecken, und dass das zweite Ende 48 jedes Magnets 34 in der Längsrichtung betrachtet mindestens so weit vom ersten Trägerende 14 entfernt ist wie das erste Ende 46 des in der Reihe 32 folgenden Magnets 34 und quer zur Längsrichtung seitlich versetzt zum ersten Ende 46 des in der Reihe 32 folgenden Magnets 34 angeordnet ist.

## Patentansprüche

1. Leitungsführungsanordnung (10) mit einem Träger (12) zur Aufnahme mindestens einer Leitung, der biegsam oder gelenkig ausgebildet und so faltbar ist, dass ein erster Abschnitt (24) über einem mit ihm durch einen gebogenen Abschnitt (28) verbundenen zweiten Abschnitt (26) ablegbar ist, wobei an einer die Unterseite des ersten Abschnitts (24) und die Oberseite des zweiten Abschnitts (26) bildenden Seite (30) des Trägers (12) mindestens eine sich in seiner von einem ersten Trägerende (14) zu einem zweiten Trägerende (16) verlaufenden Längsrichtung erstreckende Reihe (32) von Magneten (34) so angeordnet ist, dass bei einer Faltung des Trägers (12) Magnetpole am ersten Abschnitt (24) gleichnamigen Magnetpolen am zweiten Abschnitt (26) gegenüberliegen, **dadurch gekennzeichnet, dass** sich die Magnete (34) in der Längsrichtung jeweils von einem ersten Ende (46) bis zu einem zweiten Ende (48) erstrecken, und dass das zweite Ende (48) jedes Magnets (34) mindestens so weit vom ersten Trägerende (14) entfernt ist wie das erste Ende (46) des in der Reihe (32) folgenden Magnets (34) und quer zur Längsrichtung seitlich versetzt zum ersten Ende (46) des in der Reihe (32) folgenden Magnets (34) angeordnet ist.

2. Leitungsführungsanordnung nach Anspruch 1, **dadurch gekennzeichnet, dass** das zweite Ende (48) jedes Magnets (34) weiter vom ersten Trägerende (14) entfernt ist als das erste Ende (46) des in der Reihe (32) folgenden Magnets (34).

3. Leitungsführungsanordnung nach Anspruch 1 oder 2, **dadurch gekennzeichnet, dass** die Magnete (34) in Draufsicht eine Trapezform, vorzugsweise eine Parallelogrammform, aufweisen.

4. Leitungsführungsanordnung nach Anspruch 1 oder 2, **dadurch gekennzeichnet, dass** die Magnete (34) in Draufsicht eine Pfeilkontur mit einer Spitze an einem ihrer Enden und einer Ausnehmung am anderen ihrer Enden aufweisen.

5. Leitungsführungsanordnung nach Anspruch 1 oder 2, **dadurch gekennzeichnet, dass** die Magnete (34) in Draufsicht eine im wesentlichen Z-förmige Außenkontur aufweisen.

6. Leitungsführungsanordnung nach einem der vorangehenden Ansprüche, **dadurch gekennzeichnet, dass** die Magnete (34) am Träger (12) abnehmbar montiert sind.

7. Leitungsführungsanordnung nach einem der vorangehenden Ansprüche, **dadurch gekennzeichnet, dass** die Magnete (34)jeweils in einer am Träger (12) montierten Hülle (36) aufgenommen sind.

8. Leitungsführungsanordnung nach Anspruch 7, **dadurch gekennzeichnet, dass** die Hüllen (36) jeweils eine Aufnahmetasche (40) aufweisen, in die einer der Magnete (34) lose eingelegt ist.

9. Leitungsführungsanordnung nach Anspruch 7 oder 8, **dadurch gekennzeichnet, dass** die Hüllen (36) jeweils aus mindestens zwei lösbar miteinander verbundenen Teilen (38) bestehen.

10. Leitungsführungsanordnung nach Anspruch 9, **dadurch gekennzeichnet, dass** die Hüllenteile (38) mittels Rasthaken (42) miteinander verbunden sind.

11. Leitungsführungsanordnung nach einem der vorangehenden Ansprüche, **dadurch gekennzeichnet, dass** der Träger (12) eine Energieführungskette mit gelenkig miteinander verbundenen Kettengliedern (18) ist.

## Claims

1. Line routing arrangement (10) having a carrier (12) for accommodating at least one line, the carrier (12) being designed to be flexible or articulated and being able to be folded in such a way that a first section (24) can be placed over a second section (26), which is joined to it by means of a curved section (28), wherein at least one row (32) of magnets (34), which extends in its longitudinal direction running from a first carrier end (14) to a second carrier end (16), is arranged on a side (30) of the carrier (12), which forms the bottom side of the first section (24) and the upper side of the second section (26), in such a way that when the carrier (12) is folded magnet poles on the first section (24) face like magnet poles on the second section (26), **characterised in that** the magnets (34) extend in the longitudinal direction in each case from a first end (46) to a second end (48), and **in that** the second end (48) of each magnet (34) is at least as far away from the first carrier end (14) as the first end (46) of the next magnet (34) in the row (32) and is arranged transversely with respect to the longitudinal direction laterally offset to the first end (46) of the next magnet (34) in the row (32).

2. Line routing arrangement according to Claim 1, **characterised in that** the second end (48) of each magnet (34) is further away from the first carrier end (14) than the first end (46) of the next magnet (34) in the row (32).

3. Line routing arrangement according to Claim 1 or 2, **characterised in that** the magnets (34) in plan view are trapezoidal, preferably in the shape of a parallelogram.

4. Line routing arrangement according to Claim 1 or 2, **characterised in that** the contour of the magnets (34) in plan view is arrow-shaped with a point at one end and a recess at the other end.

5. Line routing arrangement according to Claim 1 or 2, **characterised in that** the outer contour of the magnets (34) in plan view is substantially Z-shaped.

6. Line routing arrangement according to any one of the preceding claims, **characterised in that** the magnets (34) are removably mounted on the carrier (12).

7. Line routing arrangement according to any one of the preceding claims, **characterised in that** the magnets (34) are in each case accommodated in a casing (36) mounted on the carrier (12).

8. Line routing arrangement according to Claim 7, **characterised in that** the casings (36) in each case have a receiving slot (40), into which one of the magnets (34) is removably inserted.

9. Line routing arrangement according to Claim 7 or 8, **characterised in that** the casings (36) in each case consist of at least two parts (38) which are detachably joined to one another.

10. Line routing arrangement according to Claim 9, **characterised in that** the casing parts (38) are joined to one another by means of snap arms (42).

11. Line routing arrangement according to any one of the preceding claims, **characterised in that** the carrier (12) is a cable drag chain having chain links (18) joined to one another in an articulated manner.

## Revendications

1. Système (10) de guidage de canalisations, muni d'un support (12) qui est conçu pour recevoir au moins une canalisation, offre une réalisation souple ou articulée, et peut être replié de façon telle qu'un premier tronçon (24) puisse être rabattu sur un second tronçon (26) relié à ce dernier par l'intermédiaire d'une région cintrée (28), sachant qu'au moins une rangée (32) d'aimants (34), épousant le tracé de la direction longitudinale du support s'étendant depuis une première extrémité (14) du support jusqu'à une seconde extrémité (16) dudit support, est disposée sur un côté (30) dudit support (12) matérialisant la face inférieure du premier tronçon (24) et la face supérieure du second tronçon (26), de telle sorte que, lorsque ledit support (12) est replié, des pôles magnétiques situés sur ledit premier tronçon (24) soient placés en vis-à-vis de pôles magnétiques de même polarité, situés sur ledit second tronçon (26), **caractérisé par le fait que** les aimants (34) s'étendent, à chaque fois, depuis une première extrémité (46) jusqu'à une seconde extrémité (48) dans la direction longitudinale ; et **par le fait que** la seconde extrémité (48) de chaque aimant (34) se trouve, par rapport à la première extrémité (14) du support, au moins à une même distance que la première extrémité (46) de l'aimant (34) successif dans la rangée et occupe, vis-à-vis de ladite première extrémité (46) dudit aimant (34) successif, dans la rangée, une position latéralement décalée dans le sens transversal par rapport à la direction longitudinale.

2. Système de guidage de canalisations, selon la revendication 1, **caractérisé par le fait que** la seconde extrémité (48) de chaque aimant (34) est davantage éloignée, de la première extrémité (14) du support, que la première extrémité (46) de l'aimant (34) successif, dans la rangée.

3. Système de guidage de canalisations, selon la revendication 1 ou 2, **caractérisé par le fait que** les aimants (34) revêtent la forme d'un trapèze, de préférence la forme d'un parallélogramme en observation par-dessus.

4. Système de guidage de canalisations, selon la revendication 1 ou 2, **caractérisé par le fait que** les aimants (34) présentent, observés par-dessus, un profil de flèche comprenant une pointe, à l'une de ses extrémités, et un évidement à l'autre de ses extrémités.

5. Système de guidage de canalisations, selon la revendication 1 ou 2, **caractérisé par le fait que** les aimants (34) présentent, observés par-dessus, un profil extérieur essentiellement configuré en Z.

6. Système de guidage de canalisations, selon l'une des revendications précédentes, **caractérisé par le fait que** les aimants (34) sont montés sur le support (12) avec faculté de dépose.

7. Système de guidage de canalisations, selon l'une des revendications précédentes, **caractérisé par le fait que** les aimants (34) sont logés, à chaque fois, dans une enveloppe (36) montée sur le support (12).

8. Système de guidage de canalisations, selon la revendication 7, **caractérisé par le fait que** les enveloppes (36) sont pourvues, à chaque fois, d'un compartiment de réception (40) dans lequel l'un des aimants (34) est inséré avec jeu.

9. Système de guidage de canalisations, selon la revendication 7 ou 8, **caractérisé par le fait que** les enveloppes (36) sont composées, à chaque fois, d'au moins deux parties (38) reliées amoviblement l'une à l'autre.

10. Système de guidage de canalisations, selon la revendication 9, **caractérisé par le fait que** les parties (38) des enveloppes sont reliées mutuellement au moyen de crochets encliquetables (42).

11. Système de guidage de canalisations, selon l'une des revendications précédentes, **caractérisé par le fait que** le support (12) est une chaîne de guidage d'énergie, dotée de maillons (18) reliés les uns aux autres de manière articulée.
